(19) Europäisches Patentamt
European Patent Office
Office européen des brevets

(11) EP 4 431 562 A2

(12) **EUROPÄISCHE PATENTANMELDUNG**

(43) Veröffentlichungstag:
**18.09.2024 Patentblatt 2024/38**

(21) Anmeldenummer: **24184165.9**

(22) Anmeldetag: **17.12.2018**

(51) Internationale Patentklassifikation (IPC):
***C08K 5/42*** *(2006.01)*

(52) Gemeinsame Patentklassifikation (CPC):
(C-Sets verfügbar)
**C08L 69/00** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017 EP 17208343**

(62) Dokumentnummer(n) der früheren Anmeldung(en) nach Art. 76 EPÜ:
**18815745.7 / 3 728 469**

(71) Anmelder: **Covestro Deutschland AG**
**51373 Leverkusen (DE)**

(72) Erfinder:
- **SEIDEL, Andreas**
**41542 Dormagen (DE)**
- **HEUER, Helmut Werner**
**57074 Siegen (DE)**
- **WEHRMANN, Rolf**
**47800 Krefeld (DE)**

(74) Vertreter: **Levpat**
**c/o Covestro AG**
**Gebäude K12**
**51365 Leverkusen (DE)**

Bemerkungen:
Diese Anmeldung ist am 25-06-2024 als Teilanmeldung zu der unter INID-Code 62 erwähnten Anmeldung eingereicht worden.

# (54) THERMOPLASTISCHE ZUSAMMENSETZUNGEN MIT GUTER STABILITÄT

(57) Die Erfindung betrifft eine Zusammensetzung zur Erzeugung einer thermoplastischen Formmasse, wobei die Zusammensetzung zumindest die folgenden Bestandteile enthält oder aus ihnen besteht:
A) 30 bis 94 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester, wobei die Komponente A einen Anteil an phenolischen OH Endgruppen von mindestens 300 mg/kg aufweist,
B) 5 bis 65 Gew.-% kautschukbasiertes Pfropfpolymerisat B.1 optional in Mischung mit kautschukfreiem Vinyl(co)polymerisat B.2, wobei die Komponente B einen Gehalt an von Lithium verschiedenen Alkalimetallen von in Summe >10 mg/kg aufweist,
C) 0,001 bis 1 Gew.-% mindestens eines Esters einer Sulfonsäure,
D) 0 bis 30 Gew.-% eines oder mehrerer Polymeradditive,
sowie ein Verfahren zur Herstellung der Formmasse, die Formmasse selbst, die Verwendung der Zusammensetzung oder der Formmasse zur Herstellung von Formkörpern und die Formkörper selbst.

EP 4 431 562 A2

(52) Gemeinsame Patentklassifikation (CPC): (Forts.)

C-Sets
**C08L 69/00, C08K 5/42, C08L 55/02**

## Beschreibung

Die vorliegende Erfindung betrifft thermoplastische schlagzähmodifizierte Polycarbonat- und/oder Polyestercarbonat Formmassen und deren Zusammensetzungen, ein Verfahren zur Herstellung der Formmassen, die Verwendung der Formmassen zur Herstellung von Formkörpern und die Formkörper selbst.

Thermoplastische Polycarbonat und Polyestercarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Zur Verbesserung der rheologischen und mechanischen Eigenschaften werden häufig weitere Thermoplaste als Blendpartner zugesetzt. In vielen Fällen werden insbesondere zur Steigerung der Zähigkeit bei tiefen Temperaturen Pfropfpolymerisate als Schlagzähmodifikatoren verwendet.

Die Herstellung von Formkörpern aus den Formmassen mit solchen Zusammensetzungen erfolgt in der Regel unter erhöhten Temperaturen und führt zu einer thermischen Belastung der Formmassen. Dadurch können sich unerwünschte Abbaureaktionen ergeben, die das Verarbeitungsverhalten der Formmassen und die Eigenschaften der Formkörper negativ beeinflussen. Deshalb werden bei der Herstellung der Formmassen häufig Thermostabilisatoren zugesetzt, die diese Abbaureaktionen unterdrücken sollen.

EP 1 609 818 A2 offenbart Polycarbonat-Zusammensetzungen enthaltend Ester Schwefelenthaltender organischer Säuren, die eine verbesserte Stabilität des Polycarbonats gegenüber thermischer Belastung aufweisen.

EP 1 612 231 A1 offenbart ein Verfahren zur Herstellung von Polycarbonat, wobei Ester von organischen Schwefel-enthaltenden Säuren zwischen Mittel- und Hochviskosreaktor zugesetzt werden, sowie die Verwendung dieser Ester zur Inhibierung von katalytisch aktiven Verunreinigungen bei der Herstellung von Polycarbonat nach dem Schmelzeumesterungsverfahren.

Diese Dokumente offenbaren aber keine schlagzähmodifizierten Zusammensetzungen enthaltend Pfropfpolymerisat. Bei Mischungen von Polycarbonat- und Polyestercarbonat mit anderen Thermoplasten kann sich die Empfindlichkeit gegenüber thermischer Belastung aber weiter erhöhen und eine besondere Stabilisierung notwendig machen. Ebenso können weitere Einflussfaktoren für das Erreichen der gewünschten Eigenschaften wichtig werden.

WO 2013/160371 A1 offenbart PC/ABS-Zusammensetzungen, insbesondere solche basierend auf im Emulsionspolymerisationsverfahren hergestelltem ABS, wobei sich die Zusammensetzungen durch einen geringen Gehalt an freiem Bisphenol-A auszeichnen.

WO 2013/160373 A1 offenbart PC/ABS-Zusammensetzungen enthaltend Polycarbonat mit geringem OH-Endgruppengehalt (bevorzugt hergestellt im Phasengrenzflächenpolymerisationsverfahren) und ABS mit geringem Alkali-Gehalt (bevorzugt hergestellt im Masse-Polymerisationsverfahren), die sich durch eine hohe thermische Verarbeitungsstabilität in Bezug auf Glanzgrad, Polycarbonatabbau und Gehalt an freiem Bisphenol-A auszeichnen und eine verbesserte Spannungsrißbeständigkeit aufweisen.

WO 2007/065579 A1 offenbart Polycarbonat-Zusammensetzungen enthaltend Pfropfpolymerisat, die durch Zugabe einer Brönstedt Säure stabilisiert werden.

Die Zugabe von Additiven, besonders Säuren, als Thermostabilisatoren birgt allerdings das Risiko, dass zwar die thermische Stabilität verbessert wird, gleichzeitig aber andere Eigenschaften in Mitleidenschaft gezogen werden. So wird häufig die Beständigkeit unter feucht-warmen Bedingungen (d.h. Beständigkeit gegenüber hydrolytischem Polymerabbau) durch den Einsatz von Thermostabilisatoren als Additiven verringert.

Es war also wünschenswert, schlagzähmodifizierte Polycarbonat-oder Polyestercarbonat-Zusammensetzungen, optional weiterhin enthaltend Polyester, und daraus hergestellte Formmassen bereitzustellen, die sich durch die Kombination einer guten Stabilität gegenüber thermischer Belastung und eine guten Hydrolysestabilität auszeichnen.

Es wurde nun überraschenderweise gefunden, dass Zusammensetzung zur Erzeugung einer thermoplastischen Formmasse, wobei die Zusammensetzung zumindest die folgenden Bestandteile enthält:

A) 30 bis 94 Gew.-%, bevorzugt 40 bis 80 Gew.-%, besonders bevorzugt 50 bis 75 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester,

B) 5 bis 65 Gew.-%, bevorzugt 10 bis 50 Gew.-%, besonders bevorzugt 20 bis 45 Gew.-% kautschukbasiertes Pfropfpolymerisat B.1, optional in Mischung mit kautschukfreiem Vinyl(co)polymerisat B.2,

C) 0,001 bis 1 Gew.-%, bevorzugt 0,002 bis 0,2 Gew.-%, besonders bevorzugt 0,005 bis 0,05 Gew.-% mindestens eines Sulfonsäureesters, bevorzugt eines Esters einer aromatischen Sulfonsäure, besonders bevorzugt eines Esters einer Sulfonsäure einer der unten dargestellten Formeln (XI) bis (XVI), am stärksten bevorzugt des Sulfonsäureesters gemäß der unten dargestellten Formel (XVII),

D) 0 bis 30 Gew.-%, bevorzugt 0,1 bis 10 Gew.-%, besonders bevorzugt 0,2 bis 5 Gew.-% eines oder mehrerer Polymeradditive

die vorteilhaften Eigenschaften aufweisen.

Wenn die Komponente B sowohl B.1 als auch B.2 enthält, ist der angegebene Anteil der Komponente B die Summe der Anteile von B.1 und B.2.

In bevorzugten Ausfiihrungsform besteht die Zusammensetzung zu mindestens 90 Gew.-%, besonders bevorzugt zu mindestens 95 Gew.-%, insbesondere bevorzugt mindestens 98 Gew.-% aus den Komponenten A bis D. In einer weiter bevorzugten Ausfiihrungsform besteht die Zusammensetzung nur aus den Komponenten A bis D.

In bevorzugter Ausfiihrungsform handelt es sich bei der thermoplastischen Formmasse um eine Formmasse enthaltend aromatisches Polycarbonat, besonders bevorzugt um aromatisches Polycarbonat enthaltend von Bisphenol-A abgeleitete Strukturelemente, insbesondere bevorzugt um aromatisches Polycarbonat ausschließlich auf Basis von Bisphenol-A als Diphenol.

Eine weitere Aufgabe bestand darin, ein Verfahren bereitzustellen, mit dem eine schlagzähmodifizierte Polycarbonat- und Polyestercarbonat Zusammensetzung hergestellt werden kann und bei dem die erhaltene Formmasse eine gute thermische Stabilität aufweist.

Es war insbesondere wünschenswert, ein Verfahren bereitzustellen, mit dem eine Zusammensetzung enthaltend als Komponente A Polycarbonate und/oder Polyestercarbonate enthaltend Fries-Strukturen gemäß den unten aufgeführten Formeln IV bis VII zu einer thermisch stabilen Formmasse verarbeitet werden kann, insbesondere auch dann, wenn die Zusammensetzung Lithium enthält (beispielsweise eingebracht als verfahrensbedingte Verunreinigung des Pfropfpolymerisats B). Formmassen hergestellt aus solchen Zusammensetzungen weisen oft vorteilhafte rheologische und mechanische Eigenschaften auf und basieren auf kommerziell gut verfügbaren Inhaltsstoffen. Allerdings ist die thermische Stabilität insbesondere solcher Formmassen für manche Anwendungen nicht ausreichend, so dass ein besonderer Bedarf nach einem verbesserten Herstellverfahren bestand.

Es wurde nun gefunden, dass ein Verfahren zur Herstellung einer schlagzähmodifizierten thermoplastischen Formmasse enthaltend

A) 30 bis 94 Gew.-%, bevorzugt 40 bis 80 Gew.-%, besonders bevorzugt 50 bis 75 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester,

B) 5 bis 65 Gew.-%, bevorzugt 10 bis 50 Gew.-%, besonders bevorzugt 20 bis 45 Gew.-% kautschukbasiertes Pfropfpolymerisat B.1, optional in Mischung mit kautschukfreiem Vinyl(co)polymerisat B.2,

D) 0 bis 30 Gew.-%, bevorzugt 0,1 bis 10 Gew.-%, besonders bevorzugt 0,2 bis 5 Gew.-% eines oder mehrerer Polymeradditive,

wobei die Komponenten bei einer Temperatur von 200 bis 350 °C miteinander vermischt und in einem Compoundierungsaggregat aufgeschmolzen und ineinander dispergiert werden,

dadurch gekennzeichnet, dass im Verfahren als Komponente C) ein Ester einer Sulfonsäure in einer Konzentration von 0,001 bis 1 Gew.-% der Zusammensetzung zugesetzt wird und

dadurch gekennzeichnet, dass entweder das Mischen der Komponenten A, B, C und Dund ggf. weiterer Komponenten der Zusammensetzung in einem einzigen Schritt erfolgt oder aber alternativ die Komponente C zunächst in einem ersten Schritt mit der Gesamtmenge oder einer Teilmenge der Komponente A bei Raumtemperatur oder bei einer erhöhten Temperatur von bevorzugt 200 bis 350°C vorgemischt wird,

die angestrebten Verbesserungen erreicht.

Wenn die Komponente B sowohl B.1 als auch B.2 enthält, ist der angegebene Anteil der Komponente B die Summe der Anteile von B.1 und B.2.

## Komponente A

Komponente A besteht aus mindestens einem Vertreter ausgewählt aus der Gruppe bestehend aus aromatischem Polycarbonat und aromatischem Polyestercarbonat und optional zusätzlich aromatischem Polyester.

Bevorzugt enthält Komponente A aromatisches Polycarbonat.

Besonders bevorzugt wird als Komponente A ein oder mehrere aromatische Polycarbonate eingesetzt.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

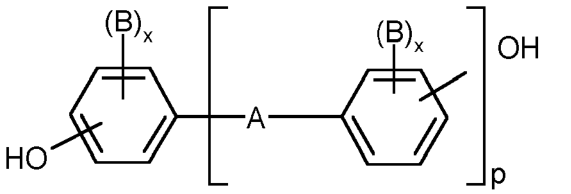

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

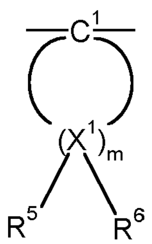

(II)

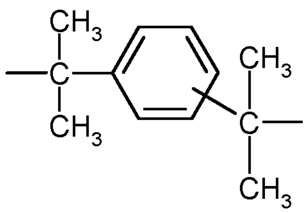

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem

Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$,-Bis-(hydroxyphenyl)-diisopropyl-benzole sowie deren kernbromierte und/oder kernchlorierte Derivate.

Weitere bevorzugte Diphenole sind solche der allgemeinen Formel (Ia), (Ib) und (Ic):

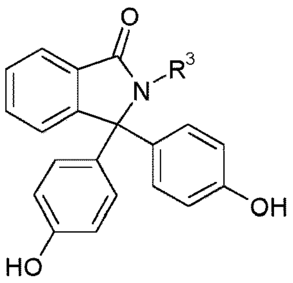
(Ia)

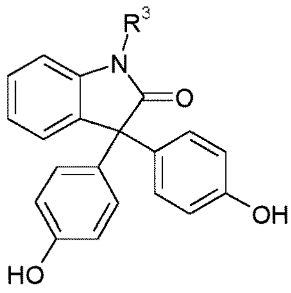
(Ib)

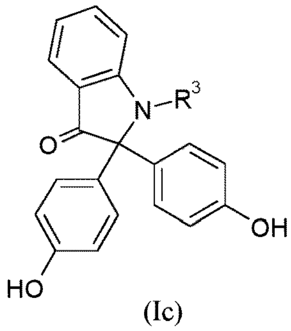
(Ic)

in denen $R_3$ für $C_1$-$C_4$-Alkyl, Aralkyl oder Aryl, bevorzugt für Methyl oder Phenyl, ganz besonders bevorzugt für Phenyl, steht.

Besonders bevorzugte Diphenole sind 4,4'-Dihydroxydiphenyl, Bisphenol-A, 2,4-Bis(4-hydroxyphenyl)-2-methylbutan, 1,1 -Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbon-

säuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Esteralsauch der Carbonatanteil der aromatischen Polyestercarbonate kann in Form von Blöcken oder statistisch verteilt im Polykondensat vorliegen.

In einer bevorzugten Ausführungsform weisen die als Komponente A geeigneten aromatischen Polycarbonate oder Polyestercarbonate ein gewichtsgemitteltes Molekulargewicht $M_w$ (ermittelt durch Gelpermeationschromatographie (GPC) in Methylenchlorid mit Polycarbonat als Standard) von 15000 g/mol bis 50000 g/mol, bevorzugt von 22000 g/mol bis 35000 g/mol, insbesondere von 24000 bis 32000 g/mol auf.

In einer besonderen Ausfuhrungsform enthalten die als Komponente A zum Einsatz kommenden Polcarbonate oder Polyestercarbonate eine oder mehrere Strukturen der allgemeinen Formeln (IV) bis (VII), welche die Folge von Fries-Umlagerungs-Reaktionen sind und die im Folgenden als "Fries-Strukturen" oder "Umlagerungsstrukturen" bezeichnet werden,

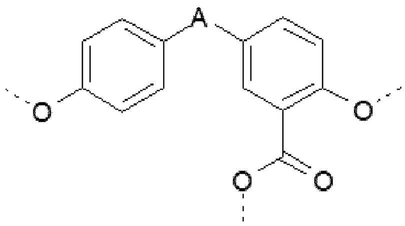

(IV)

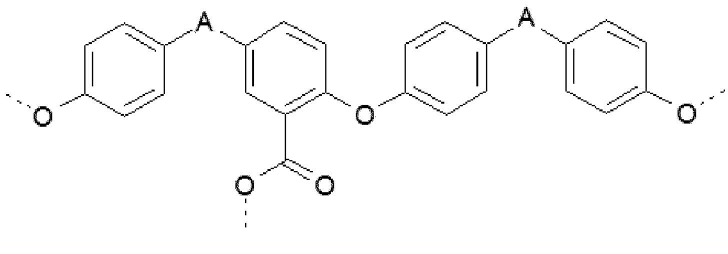

(V)

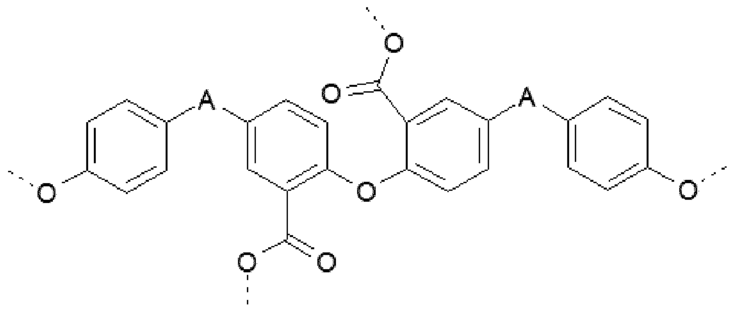

(VI)

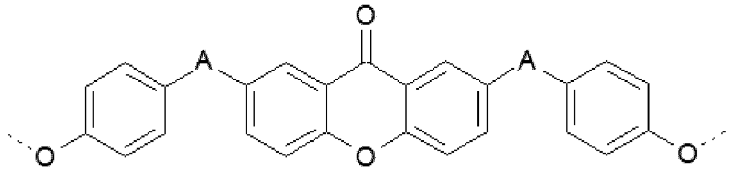

(VII)

in denen die Phenylringe unabhängig voneinander ein- oder zweifach mit C1 - C8-Alkyl, Halogen wie Chlor oder Brom, bevorzugt C1-C4-Alkyl, besonders Methyl substituiert sein können und A die bei Formel (I) angegebene Bedeutung hat,

wobei in dieser besonderen Ausfuhrungsform die Menge der Struktureinheiten (IV) bis (VII) in Summe mindestens 50 mg/kg beträgt, bezogen auf die Summe von aromatischem Polycarbonat und Polyestercarbonat gemäß Komponente A. Bevorzugt beträgt die Menge der Struktureinheiten (IV) bis (VII) 50 bis 10000 mg/kg, besonders bevorzugt 100 bis 3000 mg/kg, ganz besonders bevorzugt 200-1200 mg/kg, jeweils bezogen auf die Summe von aromatischem Polycarbonat und Polyestercarbonat gemäß Komponente A.

Die Struktureinheiten der Formeln (IV) bis (VII) sind abgeleitet von und resultieren aus den für die Herstellung des Polycarbonats eingesetzten Diphenolen. So sind z.B. im Falle von Bisphenol A als Diphenol die Phenylringe der Umlagerungsstrukturen unsubstituiert.

Bei dem Abbau durch alkalische Verseifung der aromatischen Polycarbonate und/oder aromatischen Polyestercarbonate gemäß Komponente A zu Analysezwecken werden die für die jeweiligen Umlagerungsstrukturen charakteristischen niedermolekularen Abbauprodukte der Formeln (IVa) bis (VIIa), beispielhaft für Bisphenol A als Diphenol (d.h. für A = Isopropyliden) gezeigt, gebildet und deren Mengen nach Auftrennung mittels HPLC mit kemmagnetischer Resonanzspektroskopie ($^1$H NMR) bestimmt.

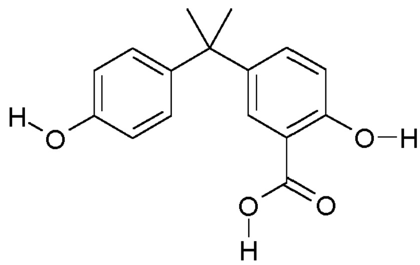

(IVa)

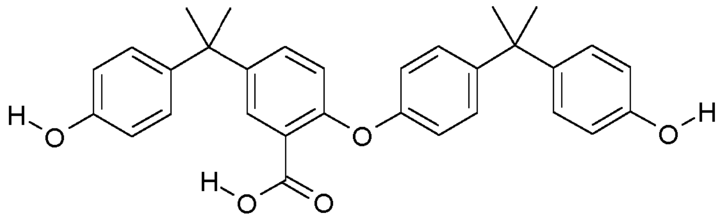

(Va)

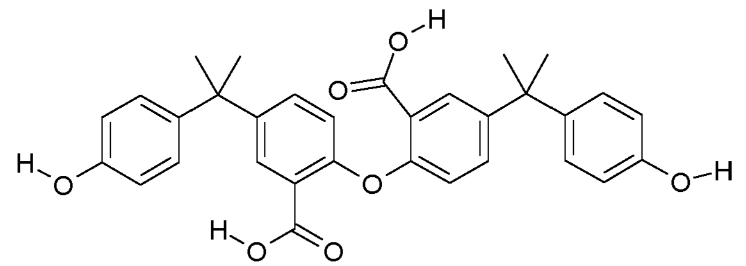

(VIa)

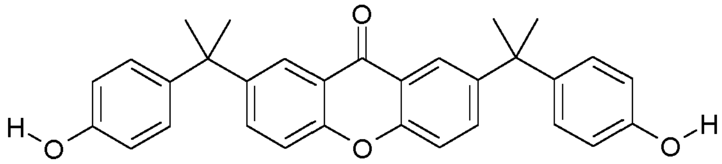

(VIIa)

Solche Fries-Strukturen enthaltende aromatische Polycarbonate und/oder Polyestercarbonate werden in einer besonderen Ausführungsforin im Schmelzepolymerisationsverfahren hergestellt.

In einer weiteren Ausführungsforin weisen die als Komponente A zum Einsatz kommenden aromatischen Polycarbonate und/oder Polyestercarbonate einen Gehalt an phenolischen OH-Endgruppen von bevorzugt mindestens 100 mg/kg, besonders bevorzugt von mindestens 200 mg/kg, weiter bevorzugt von mindestens 300 mg/kg, insbesondere von mindestens 400 mg/kg auf.

Die Bestimmung der Konzentration an phenolischen OH-Endgruppen in der Komponente A erfolgt mittels Infrarotspektroskopie gemäß Horbach, A.; Veiel, U.; Wunderlich, H., Makromolekulare Chemie, 1965, Band 88, S. 215-231.

In einer weiteren Ausfuhrungsform weisen die als Komponente A zum Einsatz kommenden aromatischen Polycarbonate und/oder Polyestercarbonate einen Gehalt an phenolischen OH-Endgruppen von bevorzugt mindestens 100 mg/kg, besonders bevorzugt von mindestens 200 mg/kg, weiter bevorzugt von mindestens 300 mg/kg, insbesondere von mindestens 400 mg/kg auf und enthalten eine oder mehrere Fries-Strukturen der allgemeinen Formeln (IV) bis (VII).

In einer weiteren Ausfuhrungsform weisen die als Komponente A zum Einsatz kommenden aromatischen Polycarbonate und/oder Polyestercarbonate einen Gehalt an phenolischen OH-Endgruppen von bevorzugt mindestens 100 mg/kg, besonders bevorzugt von mindestens 200 mg/kg, weiter bevorzugt von mindestens 300 mg/kg, insbesondere von mindestens 400 mg/kg auf, enthalten eine oder mehrere Fries-Strukturen der allgemeinen Formeln (IV) bis (VII) und wurden im Schmelzepolymerisationsverfahren hergestellt.

In einer weiteren Ausführungsforin enthält die Komponente A zusätzlich zu dem Polycarbonat und/oder Polyestercarbonat noch einen oder mehrere aromatische Polyester.

In Frage kommende aromatische Polyester sind in bevorzugter Ausführungsfonn Polyalkylenterephthalate.

Es handelt sich hierbei in besonders bevorzugter Ausfuhrungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butan¬diol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden.

Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

In einer bevorzugten Ausfuhrungsform enthält Komponente A ein aromatisches Polycarbonat, besonders bevorzugt auf Basis von Bisphenol-A. In einer weiter bevorzugten Ausführungsform ist Komponente A frei von Polyestern, in besonders bevorzugter Ausführungsform frei von Polyestern und Polyestercarbonaten.

In einer weiteren bevorzugten Ausfuhrungsform handelt es sich bei Komponente A um ein aromatisches Polycarbonat, besonders bevorzugt um ein aromatisches Polycarbonat enthaltend vom Bisphenol-A abgeleitete strukturelle Einheiten, insbesondere um ein aromatisches Polycarbonat, welches ausschließlich auf Bisphenol-A als Diphenol basiert.

## Komponente B

Bei der Komponente B handelt es sich um kautschukbasiertes Pfropfpolymerisat B.1 oder alternativ um eine Mischung eines solchen kautschukbasierten Pfropfpolymerisats B.1 mit kautschukfreien Vinyl(Co)Polymerisaten B.2.

Die erfindungsgemäß in Komponente B zum Einsatz kommenden Pfropfpolymerisate B.1 umfassen

B.1.1 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren auf

B.1.2 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen < 10°C, weiter bevorzugt von < 0°C, besonders bevorzugt < -20°C,

wobei die aus den Monomeren B.1.1 gebildeten Polymerketten chemisch an die Pfropfgrundlage B. 1.2 gebunden sind oder in den Kautschukpartikeln so eingeschlossen sind, dass sie bei der Herstellung und Verarbeitung der erfindungsgemäßen Zusammensetzungen nicht aus den Kautschukpartikeln austreten.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfgrundlage B.1.2 hat im Allgemeinen eine mittlere Teilchengröße (D50-Wert) von 0,05 bis 10,00 $\mu$m, vorzugsweise von 0,1 bis 5,0 $\mu$m und besonders bevorzugt von 0,2 bis 1,5 $\mu$m.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B.1.1 sind vorzugsweise Gemische aus

B. 1.1.1 50 bis 99 Gew.-%, besonders bevorzugt 65 bis 85 Gew.-%, weiter bevorzugt 70 bis 80 Gew.-%, jeweils bezogen auf die Summe aus B.1.1.1 und B.1.1.2, Vinylaromaten und/oder kernsubstituierten Vinylaromaten (wie Styrol, $\alpha$-Methylstyrol, p-Methylstyrol, p-Chlorstyrol) und/oder (Meth)Acrylsäure-(C1-C8)-Alkylester, wie Methylmethacrylat, Ethylmethacrylat), und

(fortgesetzt)

| | |
|---|---|
| B. 1.1.2 | 1 bis 50 Gew.-%, besonders bevorzugt 15 bis 35 Gew.-%, weiter bevorzugt 20 bis 30 Gew.-%, jeweils bezogen auf die Summe aus B.1.1.1 und B.1.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid. |

Bevorzugte Monomere B.1.1.1 sind ausgewählt aus mindestens einem der Monomere Styrol, $\alpha$-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril. Alternativ bevorzugte Monomere sind B.1.1.1 Methylmethacrylat und B.1.1.2 Methylmethacrylat.
Als Pfropfgrundlage B.1.2 der Pfropfpolymerisate eignen sich beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetat- sowie Acrylat-Silikon-Komposit-Kautschuke
Bevorzugte Pfropfgrundlagen B.1.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B.1.1.1 und B.1.1.2) oder Gemische aus einer oder mehrerer der zuvor genannten Komponenten.
Besonders bevorzugt ist als Pfropfgrundlage B.1.2 reiner Polybutadienkautschuk. In einer weiteren bevorzugten Ausführungsform handelt es sich bei B.1.2 um Styrol-Butadien-Kautschuk, besonders bevorzugt um Styrol-Butadien-Blockcopolymer-Kautschuk.
Der Gelanteil der Pfropfgrundlage B.1.2 beträgt mindestens 30 Gew. %, vorzugsweise mindestens 40 Gew.-%, insbesondere mindestens 60 Gew.-%, jeweils bezogen auf B.1.2 und gemessen als unlöslicher Anteil in Toluol.
Der Gelgehalt der Pfropfgrundlage B.1.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).
Geeignete Polymerisate gemäß Komponente B sind beispielsweise ABS- oder MBS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.
Die Pfropfcopolymerisate in Komponente B werden durch radikalische Polymerisation, z.B. durch Emulsions-, Suspensions-, Lösungs- oder Massepolymerisation hergestellt. Als Komponente B.1 können auch Mischungen von in unterschiedlichen Verfahren hergestellten Pfropfpolymerisaten verwendet werden.
Geeignete Pfropfpolymerisate B.1 sind auch ABS-Polymerisate, die durch Redox-Initiierung mit einem Initiatorsystem aus organischem Hydroperoxid und Ascorbinsäure gemäß US-P 4 937 285 hergestellt werden.
Bei der Pfropfung werden die Pfropfmonomere B. 1.1 bekanntlich nicht unbedingt vollständig auf die Pfropfgrundlage aufgepfropft. Produkte von Pfropfungsreaktionen enthalten insofern oft noch signifikante Anteile an freiem (d.h. nicht chemisch an die Pfropfgrundlage gebundenem) Copolymerisat mit einer Zusammensetzung analog zu dem der Pfropfhülle. Im Sinne der vorliegenden Erfindung wird unter Komponente B.1 ausschließlich das wie oben definierte Pfropfpolymer verstanden, während das herstellungsbedingt enthaltene nicht chemisch an die Pfropfgrundlage gebundene und nicht in die Kautschukpartikel eingeschlossene Copolymerisat der Komponente B.2 zugeordnet wird.
Der Anteil an diesem freiem Copolymer in Produkten von Pfropfungsreaktionen lässt sich aus deren Gelgehalten ermitteln (Anteil an freiem Copolymer = 100 Gew.-% - Gel-Gehalt des Produktes in Gew.-%), wobei der Gelgehalt bei 25°C in einem geeigneten Lösungsmittel (wie etwa Aceton) als in diesen Lösungsmitteln unlöslicher Anteil bestimmt wird.
Wenn die Pfropfpolymerisate B.1 in Emulsions-Polymerisation hergestellt werden, so umfassen diese

B. 1.1 5 bis 75 Gew.-%, bevorzugt 20 bis 60 Gew.-%, besonders bevorzugt 25 bis 50 Gew.-%, bezogen auf das Pfropfpolymerisat, wenigstens eines Vinylmonomeren auf

B. 1.2 95 bis 25 Gew.-%, bevorzugt 80 bis 40 Gew.-%, besonders bevorzugt 75 bis 50 Gew.-%, bezogen auf das Pfropfpolymerisat, einer oder mehrerer kautschukelastischer Pfropfgrundlagen mit Glasübergangstemperaturen < 10°C, weiter bevorzugt von < 0°C, besonders bevorzugt < -20°C.

Bei Verwendung von in Emulsionspolymerisation hergestellten Pfropfpolymerisaten B.1 enthält die Komponente B meist Lithium in einer Konzentration von < 1 mg/kg, oft ist B frei von Lithium.
Bei Verwendung von in Emulsionspolymerisation hergestellten Pfropfpolymerisaten B.1 enthält die Komponente B meist einen Gehalt an anderen Alkalimetallen von in Summe > 10 mg/kg, oft > 20 mg/kg.
Der Gehalt an Alkalimetallen wird ermittelt durch optische Emissionsspektrometrie mittels induktiv gekoppeltem Plasma (ICP-OES) mit internem Standard. Hierzu wird die Probe in konzentrierter Salpetersäure in der Mikrowelle bei

200°C und 200 bar aufgeschlossen, auf 1 M Salpetersäure verdünnt und vermessen.

Die Pfropfgrundlage B.1.2 von in Emulsionspolymerisation hergestellten Pfropfpolymerisaten B.1 haben eine mittlere Teilchengröße (D50-Wert) von 0,05 bis 2,00 μm, bevorzugt von 0,1 bis 1,0 μm, besonders bevorzugt von 0,2 bis 0,5 μm.

Wenn die Pfropfpolymerisate B.1 in Suspensions-, Lösungs- oder Massepolymerisation hergestellt werden, so umfassen diese

B. 1.1 80 bis 95 Gew.-%, bevorzugt 84 bis 92 Gew.-%, besonders bevorzugt 87 bis 91 Gew.-%, bezogen auf das Pfropfpolymerisat, wenigstens eines Vinylmonomeren auf

B.1.2 20 bis 5 Gew.-%, bevorzugt 16 bis 8 Gew.-%, besonders bevorzugt 13 bis 9 Gew.-%, bezogen auf das Pfropfpolymerisat, einer oder mehrerer kautschukelastischer Pfropfgrundlagen mit Glasübergangstemperaturen < 10°C, weiter bevorzugt von < 0°C, besonders bevorzugt < -20°C.

Bei Verwendung von in Massepolymerisation hergestellten Pfropfpolymerisaten B.1 enthält die Komponente B meist Lithium in einer Konzentration von >1 mg/kg, oft in einer Konzentration von > 2 mg/kg.

Bei Verwendung von in Massepolymerisation hergestellten Pfropfpolymerisaten B.1 enthält die Komponente B meist einen Gehalt an anderen Alkalimetallen von in Summe < 10 mg/kg, oft < 5 mg/kg.

Die Pfropfgrundlage B.1.2 von in Suspensions-, Lösungs- oder Massepolymerisation hergestellten Pfropfpolymerisaten B.1 haben eine mittlere Teilchengröße (D50-Wert) von 0,3 bis 10,00 μm, bevorzugt von 0,4 bis 5,0 μm, besonders bevorzugt von 0,5 bis 1,5 μm.

Weitere besonders geeignete im Emulsions-Polymerisationsverfahren hergestellte Pfropfpolymerisate sind MBS-Modifikatoren mit Kern-Schale-Struktur sowie Modifikatoren mit Kern-Schale-Struktur enthaltend einen Kern aus einem Silikon-, Acrylat- oder Silikon-Acrylat-Kompositkautschuk und eine Hülle aus entweder Styrol und Acrylnitril oder alternativ aus Methylmethacrylat.

Bei der Komponente B.2 handelt es sich um (Co)Polymerisate von mindestens einem Monomeren aus der Gruppe der Vinylaromaten, Vinylcyanide (ungesättigte Nitrile), (Meth)-Acrylsäure-(C1 bis C8)-Alkylester, ungesättigte Carbonsäuren sowie Derivate (wie Anhydride und Imide) ungesättigter Carbonsäuren.

Insbesondere geeignet sind als Komponente B.2 (Co)Polymerisate aus

B.2.1 50 bis 99 Gew.-%, bevorzugt 65 bis 85 Gew.-%, besonders bevorzugt 70 bis 80 Gew.-% bezogen auf das (Co)Polymerisat C mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und

B.2.2 1 bis 50 Gew.-%, bevorzugt 15 bis 35 Gew.-%, besonders bevorzugt 20 bis 30 Gew.-% bezogen auf das (Co)Polymerisat C mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B.2 sind harzartig, thermoplastisch und kautschukfrei.

Besonders bevorzugt ist das Copolymerisat aus B.2.1 Styrol und B.2.2 Acrylnitril.

In einer weiteren bevorzugten Ausfuhrungsform ist B.2 ein Polymerisat ein B.2.1 und B.2.2 Methylmethacrylat.

Dieses kautschukfreie Vinyl(co)polymerisat B.2 weist in ein gewichtgemitteltes Molekulargewicht $M_w$ 30 bis 250 kg/mol, bevorzugt von 70 bis 200 kg/mol, insbesondere von 90 bis 180 kg/mol auf.

Das gewichtsgemittelte Molekulargewicht Mw des kautschukfreien Vinyl(co)polymerisats B.2 in Komponente B wird im Rahmen der vorliegenden Erfindung per Gelpermeationschromatographie (GPC) in Tetrahydrofuran gegen Polystyrol als Standard gemessen.

## Komponente C

Bei der Komponente C handelt es sich um einen Sulfonsäureester oder eine Mischung verschiedener Sulfonsäureester.

In bevorzugter Ausfuhrungsform handelt es sich bei den in Komponente C zum Einsatz kommenden Sulfonsäureestern um Ester aromatischer Sulfonsäuren R-$SO_2$(OH), wobei R ein $C_6$- bis $C_{20}$-Aryl oder $C_7$- bis $C_{12}$-Aralkyl, bevorzugt ausgewählt aus der Liste bestehend aus Phenyl, Kresyl, Xylenyl, Propylphenyl, Butylphenyl, tert.-Butylphenyl, besonders bevorzugt ausgewählt aus der Liste bestehend aus Phenyl, Kresyl, Xylenyl, am stärksten bevorzugt Phenyl ist.

Beispiele von als Komponente C geeignete Ester sind ausgewählt aus mindestens einer Verbindung gemäß

a) der Formel (VIII)

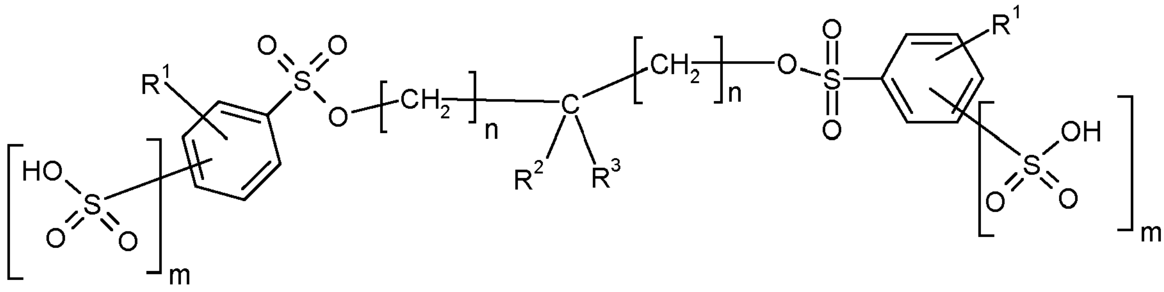

(VIII)

b) der Formel (IX)

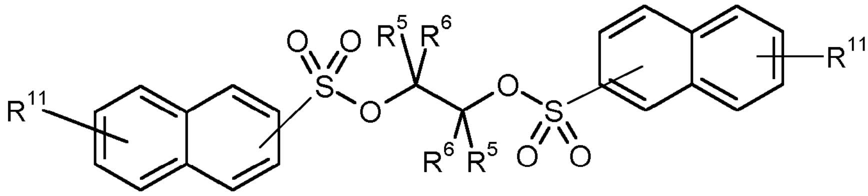

(IX)

c) der Formel (X)

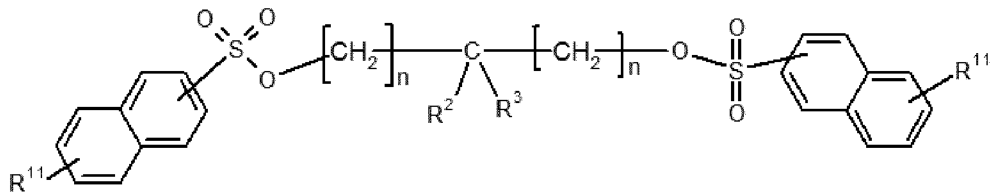

(X)

wobei in den Formeln (VIII), (IX) und (X)

$R^1$ unabhängig für Wasserstoff oder unsubstituiertes oder durch Halogen substituiertes $C_1$-$C_{20}$-Alkyl steht,

$R^2$ und $R^3$ unabhängig voneinander für Wasserstoff, $C_1$-$C_6$-Alkyl oder $C_4$-$C_{30}$-Alkylcarboxyl, oder für den Rest

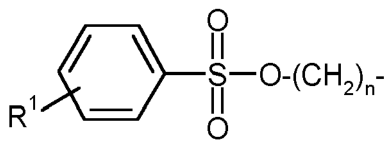

stehen, worin

$R^1$ die oben genannte Bedeutung hat,

m unabhängig voneinander für 0 oder 1 steht,

| | |
|---|---|
| n | für 0, 1 oder 2 steht, |
| $R^5$ und $R^6$ | unabhängig für Wasserstoff oder für $C_1$-$C_{20}$-Alkyl stehen, wobei Alkyl durch Halogen substituiert sein kann, |
| $R^{11}$ | unabhängig für Wasserstoff oder Di-($C_1$-$C_4$)-Alkylamino steht. |

Weitere Beispiele von als Komponente C geeignete und bevorzugt als solche zum Einsatz kommende Sulfonsäureester sind Verbindungen gemäß der Formeln (XI) bis (XVI).

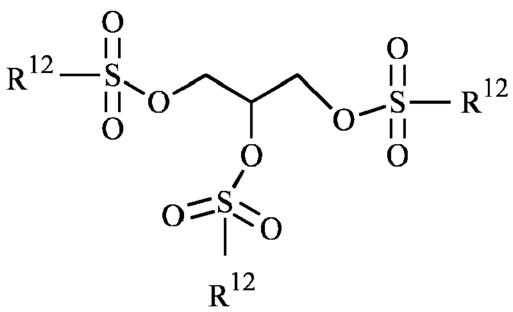

(XI)

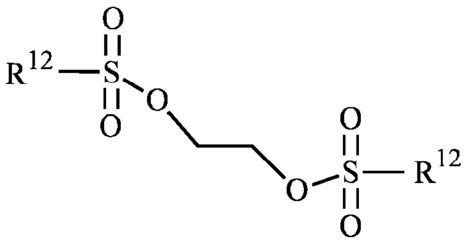

(XII)

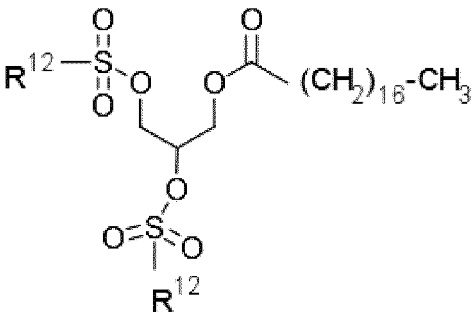

(XIII)

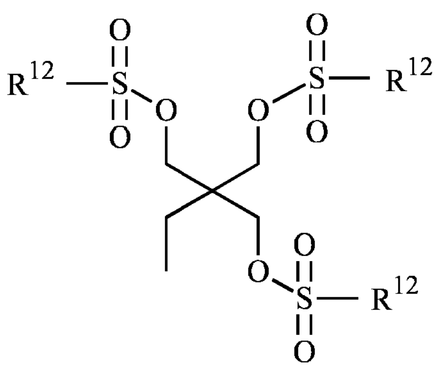

(XIV)

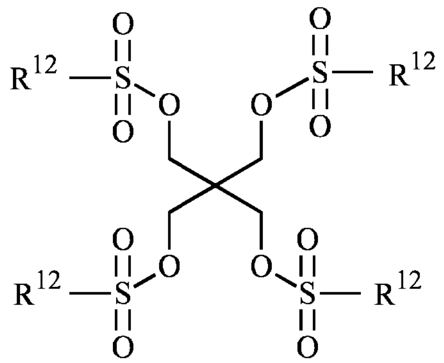

(XV)

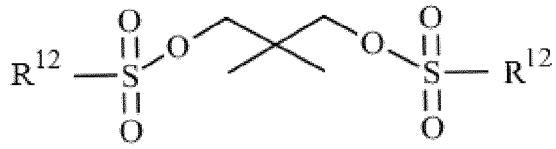

(XVI)

wobei $R^{12}$ in den Formeln (XI) bis (XVI) jeweils unabhängig voneinander für $C_6$- bis $C_{20}$-Aryl oder $C_7$- bis $C_{12}$-Aralkyl, bevorzugt ausgewählt aus der Liste bestehend aus Phenyl, Kresyl, Xylenyl, Propylphenyl, Butylphenyl, tert.-Butylphenyl, besonders bevorzugt ausgewählt aus der Liste bestehend aus Phenyl, Kresyl, Xylenyl, am stärksten bevorzugt Phenyl steht.

Am stärksten bevorzugt ist als Komponente C der Sulfonsäureester gemäß Formel (XVII)

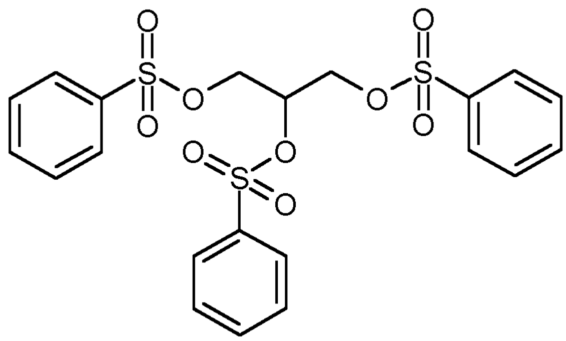

(XVII)

Die erfindungsgemäßen Verbindungen gemäß Komponente C können einzeln oder in beliebigen Mischungen untereinander der Zusammensetzung zugesetzt werden.

Die Verbindungen gemäß Komponente C haben bevorzugt Schmelzpunkte größer als 30°C, bevorzugt größer 40°C und besonders bevorzugt größer 50°C und Siedepunkte bei 1 mbar größer 150°C, bevorzugt größer 200°C und besonders bevorzugt größer 230°C.

## Komponente D

Die Zusammensetzung kann als Komponente D ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika bzw. Leitfähigkeitsadditiven, weiteren Stabilisatoren (z.B. Hydrolyse-, Wärmealterungs- und Umesterungsstabilisatoren, UV-Stabilisatoren, Brönstedt-saure Verbindungen, Fließfähigkeitspromotoren, Verträglichkeitsvermittlern, Schlagzähigkeitsmodifikatoren ohne Kern-Schale-Struktur, antibakteriell wirkenden Additiven (beispielsweise Silber oder Silbersalze), kratzfestigkeitsverbessernden Additiven (beispielsweise Silikonöle), IR-Absorbentien, optischen Aufhellern, fluoreszierenden Additiven, weiteren von den Komponenten A und B verschiedenen polymeren Bestandteilen (beispielsweise funktionelle Blendpartner), Farbstoffen und Pigmenten sowie Füll- und Verstärkungsstoffen (beispielsweise Karbonfasern, Talk, Glimmer, Kaolin, CaCOs).

In bevorzugter Ausführungsform ist die Zusammensetzung frei von Flammschutzmitteln, Antidrippingmitteln,

Flammschutzsynergisten und Rauchinhibitoren.

In ebenfalls bevorzugter Ausfuhrungsform ist die Zusammensetzung frei von Füll- und Verstärkungsstoffen.

In besonders bevorzugter Ausfuhrungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern sowie Farbstoffen und Pigmenten.

In einer weiter bevorzugten Ausführungsform sind die gemäß Komponente D zum Einsatz kommenden Additive ausgewählt aus der Gruppe bestehend aus Gleit- und Entformungsmitteln, Stabilisatoren, Fließfähigkeitspromotoren, Verträglichkeitsvermittlern sowie Farbstoffen und Pigmenten, wobei die Zusammensetzungen frei sind von weiteren Polymeradditiven.

Im Folgenden werden folgende besondere Ausführungsformen 1 bis 31 der vorliegenden Erfindung aufgeführt.

1. Zusammensetzung zur Erzeugung einer thermoplastischen Formmasse, wobei die Zusammensetzung zumindest die folgenden Bestandteile enthält oder aus ihnen besteht:

   A) 30 bis 94 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester,

   B) 5 bis 65 Gew.-% kautschukbasiertes Pfropfpolymerisat B.1 optional in Mischung mit kautschukfreiem Vinyl(co)polymerisat B.2,

   C) 0,001 bis 1 Gew.-% mindestens eines Esters einer Sulfonsäure,

   D) 0 bis 30 Gew.-% eines oder mehrerer Polymeradditive.

2. Zusammensetzung gemäß Ausfuhrungsform 1, wobei Komponente A ein aromatisches Polycarbonat enthält oder ist.

3. Zusammensetzung gemäß einer der vorherigen Ausfiihrungsformen, wobei die Komponente C ein Ester einer aromatischen Sulfonsäure ist.

4. Zusammensetzung gemäß einer der vorherigen Ausfiihrungsformen, wobei Komponente C ausgewählt ist aus mindestens einer Verbindung gemäß den oben genannten Formeln (XI) bis (XVI).

5. Zusammensetzung gemäß einer der vorherigen Ausführungsfonnen, wobei als Komponente C der Sulfonsäureester gemäß der oben genannten Formel (XVII) eingesetzt wird.

6. Zusammensetzung gemäß einer der vorherigen Ausfiihrungsformen enthaltend

   40-80 Gew.-% der Komponente A,

   10-50 Gew.-% der Komponente B

   0,002-0,2 Gew.-% der Komponente C und

   0,1-10 Gew.-% der Komponente D.

7. Zusammensetzung gemäß einer der vorherigen Ausfiihrungsformen enthaltend

   50-75 Gew.-% der Komponente A,

   20-45 Gew.-% der Komponente B

   0,005-0,05 Gew.-% der Komponente C und

   0,2-5 Gew.-% der Komponente D.

8. Zusammensetzungen gemäß einer der vorherigen Ausführungsfonnen, wobei die Komponente B einen Lithiumgehalt von < 1 mg/kg aufweist.

9. Zusammensetzung gemäß einer der vorherigen Ausfiihrungsformen, wobei die Komponente B einen Gehalt an von Lithium verschiedenen Alkalimetallen von in Summe >10 mg/kg aufweist.

10. Zusammensetzung gemäß einer der vorherigen Ausführungsfonnen, wobei die Komponente B einen Gehalt an von Lithium verschiedenen Alkalimetallen von in Summe > 20 mg/kg aufweist.

11. Zusammensetzung gemäß einer der vorherigen Ausfiihrungsformen, wobei die Komponente B frei von Lithium ist.

12. Zusammensetzung gemäß einer der vorherigen Ausfiihrungsformen, enthaltend als Komponente D mindestens ein Additiv ausgewählt aus der Gruppe bestehend aus Gleit- und Entformungsmitteln, Stabilisatoren, Fließfähigkeitspromotoren, Verträglichkeitsvermittlern sowie Farbstoffen und Pigmenten.

13. Zusammensetzung gemäß einer der vorherigen Ausführungsfonnen, wobei die Komponente A einen Anteil an phenolischen OH Endgruppen von mindestens 200 mg/kg aufweist.

14. Zusammensetzung gemäß einer der vorherigen Ausfiihrungsformen bestehend zu mindestens 90 Gew.-% aus den Komponenten A, B, C und D.

15. Zusammensetzung gemäß einer der vorherigen Ausführungsfonnen bestehend zu mindestens 95 Gew.-% aus den Komponenten A, B, C und D.

16. Zusammensetzung gemäß einer der vorherigen Ausfiihrungsformen bestehend aus den Komponenten A, B, C und D.

17. Verfahren zur Herstellung einer schlagzähmodifizierten thermoplastischen Formmasse enthaltend

A) 30 bis 94 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester,

B) 5 bis 65 Gew.-% eines kautschukbasierten Pfropfpolymerisats B.1 optional in Mischung mit kautschukfreiem Vinyl(co)polymerisat B.2,

D) 0 bis 30 Gew.-% eines oder mehrerer Polymeradditive,

wobei die Komponenten miteinander vermischt und bei einer Temperatur von 200 bis 350 °C in einem Compoundierungsaggregat aufgeschmolzen und ineinander dispergiert werden,

dadurch gekennzeichnet, dass im Verfahren als Komponente C ein Ester einer Sulfonsäure in einer Konzentration von 0,001 bis 1 Gew.-% der Zusammensetzung zugesetzt wird und

das Mischen der Komponenten A, B C und D und ggf. weiterer Komponenten der Zusammensetzung in einem einzigen Schritt erfolgt oder aber alternativ die Komponente C zunächst in einem ersten Schritt mit der Gesamtmenge oder einer Teilmenge der Komponente A bei Raumtemperatur oder bei einer erhöhten Temperatur vorgemischt wird.

18. Verfahren gemäß Ausführungsform 17, wobei

40-80 Gew.-% der Komponente A,

10-50 Gew.-% der Komponente B

0,002-0,2 Gew.-% der Komponente C und

0,1-10 Gew.-% der Komponente D

eingesetzt werden.

19. Verfahren gemäß Ausführungsform 17, wobei

50-75 Gew.-% der Komponente A,

20-45 Gew.-% der Komponente B

0,005-0,05 Gew.-% der Komponente C und

0,2-5 Gew.-% der Komponente D

eingesetzt werden.

20. Verfahren gemäß einer der Ausfiihrungsformen 17 bis 19, wobei als Komponente A aromatisches Polycarbonat und/oder aromatisches Polyestercarbonat zum Einsatz kommt, welches Fries-Strukturen gemäß mindestens einer der oben genannten Formeln (IV) bis (VII) enthält,
wobei Komponente A die Struktureinheiten (IV) bis (VII) in einer Menge von in Summe 50 bis 10000 mg/kg, bezogen auf die Summe der Gew.-Anteile der in Komponente A enthaltenden Polycarbonate und Polyestercarbonate enthält.

21. Verfahren gemäß Ausfuhrungsform 20, wobei Komponente A die Struktureinheiten (IV) bis (VII) in einer Menge von in Summe 100 bis 3000 mg/kg, bezogen auf die Summe der Gew.-Anteile der in Komponente A enthaltenden Polycarbonate und Polyestercarbonate enthält.

22. Verfahren gemäß Ausfuhrungsform 20, wobei Komponente A die Struktureinheiten (IV) bis (VII) in einer Menge von in Summe 200 bis 1200 mg/kg, bezogen auf die Summe der Gew.-Anteile der in Komponente A enthaltenden Polycarbonate und Polyestercarbonate enthält.

23. Verfahren gemäß einer der Ausfiihrungsformen 17 bis 22, wobei die Komponente C ausgewählt ist aus mindestens einer Verbindung gemäß den oben genannten Formeln (XI) bis (XVI).

24. Verfahren gemäß einer der Ausfiihrungsformen 17 bis 23, wobei die Komponente C die Verbindung gemäß Formel (XVII) ist.

25. Verfahren gemäß einer der Ausfiihrungsformen 17 bis 24, wobei die Komponente B Lithium in einer Konzentration von > 1 mg/kg enthält.

26. Verfahren gemäß einer der Ausfiihrungsformen 17 bis 24, wobei die Komponente B Lithium in einer Konzentration von > 2 mg/kg enthält.

27. Verfahren gemäß einer der Ausführungsforinen 17 bis 26, wobei die Komponente B einen Gehalt an von Lithium verschiedenen Alkalimetallen von in Summe <10 mg/kg aufweist.

28. Verfahren gemäß einer der Ausführungsforinen 17 bis 26, wobei die Komponente B einen Gehalt an von Lithium verschiedenen Alkalimetallen von in Summe <5 mg/kg aufweist.

29. Formmasse, erhalten oder erhältlich nach einem Verfahren gemäß einer der Ausführungsforinen 17 bis 28.

30. Verwendung einer Zusammensetzung nach einer der Ausfiihrungsformen 1 bis 16 oder einer Formmasse nach Ausfuhrungsform 29 zur Herstellung von Formkörpern.

31. Formkörper, erhalten oder erhältlich aus einer Zusammensetzung nach einer der Ausführungsforinen 1 bis 16 oder aus einer Formmasse nach Ausfuhrungsform 29.

## Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem

man die jeweiligen Bestandteile der Zusammensetzungen in bekannter Weise vermischt und bei Temperaturen von bevorzugt 200°C bis 350°C, weiter bevorzugt bei 230 bis 330°C, besonders bevorzugt von 250 bis 310°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet. Unter Formmasse wird also das Produkt verstanden, das erhaltend wird, wenn die Bestandteile der Zusammensetzung schmelzcompoundiert und schmelzextrudiert werden.

Das Mischen bei Raumtemperatur oder erhöhter Temperatur und/oder das Schmelzecompoundieren der Komponenten A bis D und ggf. weiterer Komponenten der Zusammensetzung kann dabei unabhängig voneinander in bekannter Weise in einem einzigen Schritt oder aber in mehreren Teilschritten erfolgen. Das bedeutet beispielsweise, dass manche der Bestandteile über den Haupteinzug eines Extruders dosiert und die restlichen Bestandteile über einen Seitenextruder später im Compoundierungsverfahren zugeführt werden können.

In einer besonderen Ausführungsform wird die Komponente C zunächst in einem ersten Schritt mit der Gesamtmenge oder einer Teilmenge der Komponente A bei Raumtemperatur vorgemischt und optional und bevorzugt bei einer erhöhten Temperatur von bevorzugt 200 bis 350°C schmelzecompoundiert, und die weiteren Komponenten der Zusammensetzungen erst danach in einem zweiten Schritt zugesetzt und schließlich die erfindungsgemäße Formmasse compoundiert.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Interiorbauteile und Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

## Beispiele

**Komponente A1**:

Lineares Polycarbonat auf Basis Bisphenol-A, hergestellt im Schmelzepolymerisationsverfahren, mit einem gewichtsgemittelten Molekulargewicht $M_w$ von 28.000 g/mol (bestimmt durch GPC in Methylenchlorid gegen einen BPA-PC-Standard). Die Komponente A1 enthält in Summe 691 mg/kg von Struktureinheiten gemäß der Formeln IV bis VII, davon 363 mg/kg von Struktureinheiten gemäß der Formel IV, 56 mg/kg von Struktureinheiten gemäß der Formel V, 17 mg/kg von Struktureinheiten gemäß der Formel VI und 255 mg/kg von Struktureinheiten gemäß der Formel VII. Komponente A weist einen phenolischen OH-Endgruppengehalt von 480 mg/kg auf.

**Komponente A2:**

Lineares Polycarbonat auf Basis Bisphenol-A, hergestellt im Phasengrenzflächenpolymerisationsverfahren, mit einem gewichtsgemittelten Molekulargewicht MW von 28.000 g/mol (bestimmt durch GPC in Methylenchlorid gegen einen BPA-PC-Standard). Die Komponente A1 enthält keine Struktureinheiten gemäß einer der Formeln IV bis VII und einen phenolischen OH-Endgruppengehalt von 150 mg/kg.

**Komponente B1:**

Acrylnitril-Butadien-Styrol (ABS)-Polymer, hergestellt im Masse-Polymerisationsverfahren, welches eine disperse Phase aus Polybutadien-haltigen Kautschukpartikeln mit Inklusionen aus Styrol-Acrylnitril-Copolymerisat und eine Styrol-Acrylnitril-Copolymerisat-Matrix enthält, ein A:B:S-Verhältnis von 23:10:67 Gew.-% und einen Gelgehalt, bestimmt

als in Aceton unlöslicher Anteil, von 20 Gew.-% aufweist. Das freie, das heißt in Aceton lösliche Styrol-Acrylnitril-Copolymer in Komponente B1 weist ein gewichtsgemitteltes Molekulargewicht $M_w$ (gemessen per GPC in Tetrahydrofuran als Lösungsmittel mit Polystyrol als Standard) von 165 kg/mol auf. Die mittlere Kautschukpartikelgröße D50, gemessen per Ultrazentrifugation, beträgt 0,85 μm. Die Schmelzeflussrate (MVR) der Komponente B1, gemessen nach ISO 1133 (Version von 2012) bei 220°C mit einer Stempellast von 10 kg, beträgt 6,7 ml/10 min. Komponente B1 enthält 3 mg/kg Li und in Summe weniger als 1 mg/kg an weiteren Alkalimetallen (jeweils bestimmt mittels ICP-OES).

**Komponente B2**

Präcompound aus 50 Gew.-% eines ABS-Pfropfpolymerisats mit Kern-Schale-Struktur, hergestellt durch Emulsionspolymerisation von 50 Gew.-%, bezogen auf das ABS-Pfropfpolymerisat, einer Mischung aus 23 Gew.-% Acrylnitril und 77 Gew.-% Styrol in Gegenwart von 50 Gew.-% bezogen auf das ABS-Pfropfpolymersiat eines teilchenförmigen vernetzten Polybutadienkautschuks (mittlerer Teilchendurchmesser $d_{50}$ = 0,25 μm) und 50 Gew.-% eines Copolymerisats aus 77 Gew.-% Styrol und 23 Gew.-% Acrylnitril mit einem gewichtsgemitteltem Molekulargewicht Mw von 130000 g/mol (bestimmt durch GPC in Tetrahydrofuran als Lösungsmittel und mit Polystyrol als Standard). Mittels ICP-OES wurden in B2 folgende Alkalimetallgehalte ermittelt: Li < 1 mg/kg, Na: 10 mg/kg, K: 25 mg/kg, wobei die Angabe <1 mg/kg bedeutet, dass das Element Lithium mit einer Nachweisgrenze des analytischen Verfahrens von 1 mg/kg nicht nachgewiesen werden konnte.

**Komponente C1:**

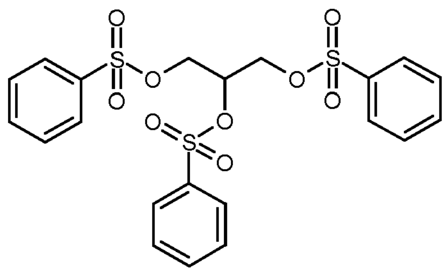

Synthese der eingesetzten Komponente C1:

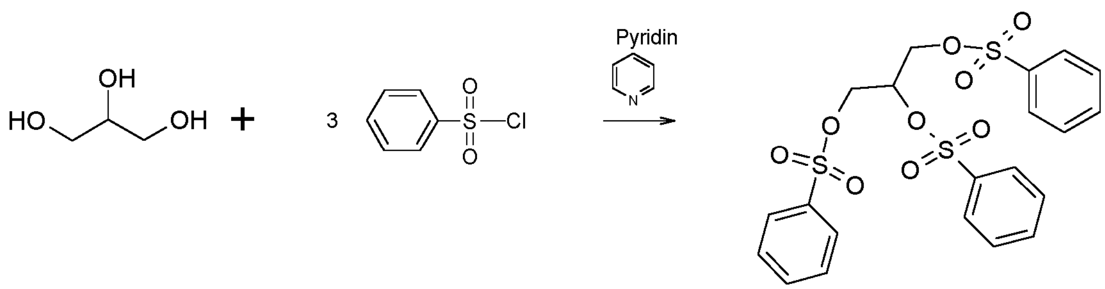


Glycerin (MW 92,10) | Benzolsulfonsäurechlorid (MW 176,62) | Glycerintribenzolsulfonsäureester (MW 512,58)

552,6 g (6,0 Mol) Glycerin der Fa. KMF und 4746g (60 Mol) Pyridin der Firma Aldrich werden unter Stickstoff vorgelegt und homogen gelöst. 3196,8 g ( 18,1Mol) Benzolsulfonsäurechlorid werden sehr langsam zugetropft, wobei eine Temperatur von 30 bis 35°C nicht überschritten werden sollte. Anschließend wird 1 Stunde bei 40°C gerührt.

Aufarbeitung:

Der Ansatz wird sehr langsam in eine Mischung aus 3 Liter destilliertem Wasser, etwa 4 kg Eis und 3 Liter Dichlormethan unter starkem Rühren abgelassen. Hierbei sollte eine Temperatur von 35°C nicht überschritten werden.
Die organische Phase wird anschließend in ca. 10 Liter Methanol gefällt, abgesaugt und so lange mit Methanol gewaschen bis ein Nachweis in der Dünnschichtchromatographie auf ein sauberes Produkt hinweist.
Anschließend wird bis zur Massenkonstanz im Vakuumtrockenschrank bei 60°C getrocknet.

Ausbeute: 970g (31,54 % der Theorie) weißes Pulver

Analytik:

- Schmelzpunkt Fp. 81-83°C
- $^1$H-NMR (400 MHz, TMS, $CDCl_3$) $\delta$ = 7,8 ppm (m, 6H), 7,7 (m, 3H), 7,55 (m, 6H), 4,75 (m, 1H), 4,1 (d, 4H).

**Komponente C2:**

Phosphorige Säure $H_3PO_3$ (> 99%ig), (Sigma-Aldrich GmbH, Darmstadt, Deutschland)

**Komponente D1:**

Pentaerythrittetrastearat, Loxiol™ P 861/3.5 Special (Emery Oleochemicals GmbH, Düsseldorf, Deutschland).

**Komponente D2:**

Irganox™ B900 (Gemisch aus 80% Irgafos™ 168 (Tris(2,4-di-tert-butyl-phenyl)-phosphit) und 20% Irganox™ 1076 (2,6-Di-tert-butyl-4-(octadecanoxycarbonylethyl)-phenol); BASF (Ludwigshafen, Deutschland).

**Herstellung und Prüfung der erfindungsgemäßen Formmassen**

Das Mischen der Komponenten erfolgte auf einem Zweiwellenextruder ZSK-25 der Fa. Coperion, Werner & Pfleiderer bei einer Massetemperatur von 260°C und unter Anlegen eines Unterdrucks von 50 mbar (absolut). Die Formkörper der Abmessung 60 mm x 40 mm x 2 mm wurden bei 270°C bzw. 300°C Massetemperatur und einer Werkzeugtemperatur von 80°C auf einer Spritzgießmaschine Typ Arburg 270 E hergestellt.
Als Indikator für die Verarbeitungsstabilität wurde der prozentuale Anstieg des Gehalts an freiem Bisphenol-A Δ[BPA] bei der Herstellung der Formkörper im Spritzguss ermittelt.
Hierfür wurden die Gehalte an freiem Bisphenol-A im compoundierten Granulat $[BPA]_{Granulat}$ und in den Spritzgussformkörpern $[BPA]_{Spntzgusskörper}$ ermittelt und der Anstieg daraus berechnet gemäß der Formel:

$$\Delta[\mathrm{BPA}] = 100 \cdot ( [\mathrm{BPA}]_{\mathrm{Spritzgusskörper}} - [\mathrm{BPA}]_{\mathrm{Granulat}} ) / [\mathrm{BPA}]_{\mathrm{Granulat}}$$

Zur Bestimmung des Gehaltes an freiem Bisphenol-A wurden die Proben in Dichlormethan gelöst und mit Methanol umgefällt. Der ausgefallene Polymeranteil wurde abfiltriert und die Filtrationslösung eingeengt. Der Gehalt an freiem BPA in der eingeengten Filtratlösung wurde durch HPLC mit UV-Detektion mit einem externen Standard bestimmt.
Als Maß für die Hydrolysebeständigkeit der Zusammensetzungen dient die relative Änderung des MVRs gemessen gemäß ISO 1133 (Version von 2012) bei 260°C mit einer Stempellast von 5 kg und mit einer Haltezeit von 5 min bei einer 7-tägigen Feucht-Warm-Lagerung (FWL-Lagerung) des Granulats bei 95°C und 100% relativer Luftfeuchte. Dabei wird der relative Anstieg des MVR-Wertes gegenüber dem MVR-Wert vor der entsprechenden Lagerung als ΔMVR(hydr) berechnet, welcher sich durch nachstehende Formel definiert:

$$\Delta MVR(hyrdr) = \frac{MVR(nach\,FWL - Lagerung) - MVR(vor\,Lagerung)}{MVR(vor\,Lagerung)} \bullet 100\%$$

**Tabelle 1:** Zusammensetzungen und ihre Eigenschaften

| **Komponenten [Gew.-Teile]** | **V1** | **2** | **V3** |
|---|---|---|---|
| A1 | 60 | 60 | 60 |
| B1 | 40 | 40 | 40 |
| C1 | | 0,02 | |
| C2 | | | 0,02 |
| D1 | 0,75 | 0,75 | 0,75 |
| D2 | 0,10 | 0,10 | 0,10 |
| **Eigenschaften** | | | |
| Δ BPA [%], Spritzguss bei 300°C | 933 | 400 | 550 |
| Δ MVR (Hydrolyse) [%] | 5 | 11 | 363 |

Die Daten in Tabelle 1 zeigen, dass mit Zusammensetzungen enthaltend Pfropfpolymerisat hergestellt im Massepolymerisationsverfahren enthaltend Lithium und die erfindungsgemäße Komponente C1 eine vorteilhafte Kombination aus verbesserter thermischer Stabilität (ermittelt als Anstieg des Gehalts von freiem Bisphenol A im Spritzgussverfahren) und hoher Hydrolysestabilität erreicht wird. Ohne eine Komponente C ist zwar die Hydrolysestabilität gut, aber die thermische Stabilität völlig unzureichend. Mit der nicht erfindungsgemäßen Komponente C2 wird zwar die thermische Stabilität verbessert, aber nicht auf das mit der erfindungsgemäßen Komponente C1 erzielte Niveau und auf Kosten einer deutlich verschlechterten Hydrolysestabilität.

In Tabelle 2 sind Versuchsdaten zusammengestellt, bei denen Zusammensetzungen enthaltend Pfropfpolymerisat hergestellt im Emulsionspolymerisationsverfahren untersucht wurden.

**Tabelle 2:** Zusammensetzungen und ihre Eigenschaften

| **Komponenten [Gew.-Teile]** | **V4** | **5** | **V6** |
|---|---|---|---|
| A1 | 60 | 60 | 60 |
| B2 | 40 | 40 | 40 |
| C1 | | 0,02 | |
| C2 | | | 0,02 |
| D1 | 0,75 | 0,75 | 0,75 |
| D2 | 0,10 | 0,10 | 0,10 |
| **Eigenschaften** | | | |
| Δ BPA [%], Spritzguss bei 300°C | 271 | 188 | 680 |
| Δ MVR (Hydrolyse) [%] | 26 | 24 | 116 |

Analog den Ergebnissen aus Tabelle 1 zeigen die Daten aus Tabelle 2, dass durch die Zugabe der erfindungsgemäßen Komponente C1 die Kombination aus thermischer Stabilität und Hydrolysestabilität am besten ist.

Die Zusammensetzungen enthaltend Pfropfpolymerisat hergestellt im Emulsionspolymerisationsverfahren zeichnen sich gegenüber den Zusammensetzungen enthaltend Pfropfpolymerisat hergestellt im Massepolymerisationsverfahren durch ein geringeres Δ BPA, aber ein höheres Δ MVR (Hydrolyse) aus. In beiden Fällen wird aber durch die erfindungsgemäße Komponente C1 ein vorteilhaftes Verhalten gegenüber der nicht erfindungsgemäßen Komponente C2 oder gegenüber Zusammensetzungen ohne eine Komponente C erreicht.

**Tabelle 3:** Zusammensetzungen und ihre Eigenschaften

| **Komponenten [Gew.-Teile]** | **V6** | **7** | **V8** | **9** |
|---|---|---|---|---|
| A1 | | | 60 | 60 |

(fortgesetzt)

| Komponenten [Gew.-Teile] | V6 | 7 | V8 | 9 |
|---|---|---|---|---|
| A2 | 60 | 60 | | |
| B1 | 40 | 40 | 40 | 40 |
| C1 | | 0,01 | | 0,01 |
| D1 | 0,75 | 0,75 | 0,75 | 0,75 |
| D2 | 0,10 | 0,10 | 0,10 | 0,10 |
| **Eigenschaften** | | | | |
| Δ BPA [%], Spritzguss bei 270°C | 204 | 191 | 207 | 93 |

Die Daten in Tabelle 3 zeigen, dass sich die Zugabe der erfindungsgemäßen Komponente C1 besonders positiv auf die Verarbeitungsstabilität auswirkt, wenn in Verbindung mit einem Pfropfpolymerisat enthaltend Lithium als Komponente A ein aromatisches Polycarbonat enthaltend Fries-Strukturen gemäß den Formeln (IV) bis (VII) eingesetzt wird. In einem solchen Fall (Beispiel 9) wird der Anstieg des freien Bisphenol A im Spritzguss durch den Zusatz der Komponente C1 erheblich deutlicher reduziert als in Beispiel 7, in dessen Zusammensetzung Komponente A keine Fries-Strukturen gemäß den Formeln (IV) bis (VII) enthält.

### Patentansprüche

1. Zusammensetzung zur Erzeugung einer thermoplastischen Formmasse, wobei die Zusammensetzung zumindest die folgenden Bestandteile enthält oder aus ihnen besteht:

   A) 30 bis 94 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester, wobei die Komponente A einen Anteil an phenolischen OH Endgruppen von mindestens 300 mg/kg aufweist,
   B) 5 bis 65 Gew.-% kautschukbasiertes Pfropfpolymerisat B.1 optional in Mischung mit kautschukfreiem Vinyl(co)polymerisat B.2, wobei die Komponente B einen Gehalt an von Lithium verschiedenen Alkalimetallen von in Summe >10 mg/kg aufweist,
   C) 0,001 bis 1 Gew.-% mindestens eines Esters einer Sulfonsäure,
   D) 0 bis 30 Gew.-% eines oder mehrerer Polymeradditive.

2. Zusammensetzung gemäß Anspruch 1, wobei Komponente A ein aromatisches Polycarbonat enthält oder ist.

3. Zusammensetzung gemäß Anspruch 1 oder 2, wobei Komponente C ausgewählt ist aus mindestens einer Verbindung gemäß den Formeln (XI) bis (XVI)

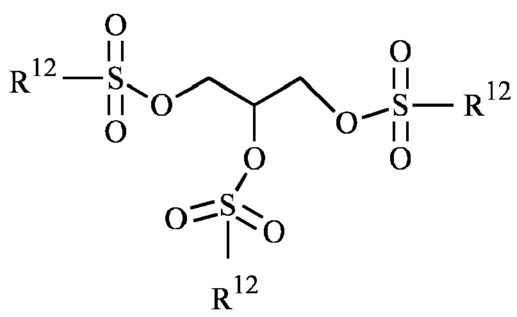

(XI)

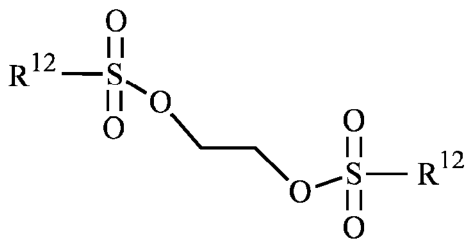

(XII)

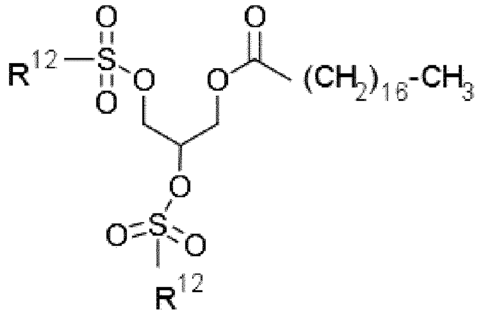

(XIII)

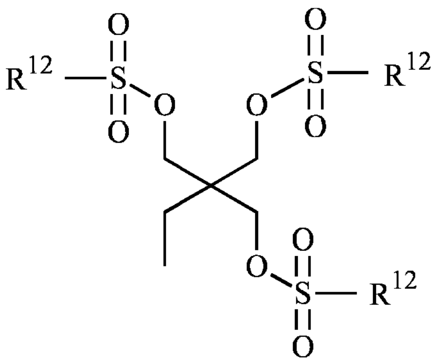

(XIV)

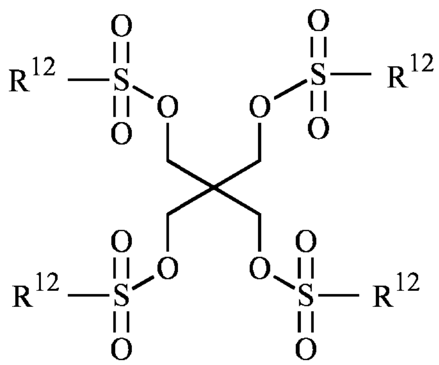

(XV)

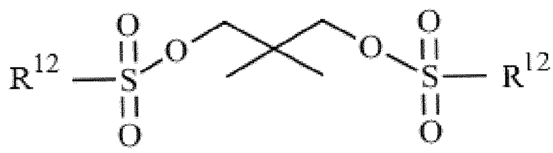

(XVI)

wobei $R^{12}$ in den Formeln (XI) bis (XVI) jeweils unabhängig voneinander für $C_6$- bis $C_{20}$-Aryl oder $C_7$- bis $C_{12}$-Aralkyl steht.

**4.** Zusammensetzung gemäß einem der vorherigen Ansprüche, wobei als Komponente C der Sulfonsäureester gemäß Formel (XVII) eingesetzt wird.

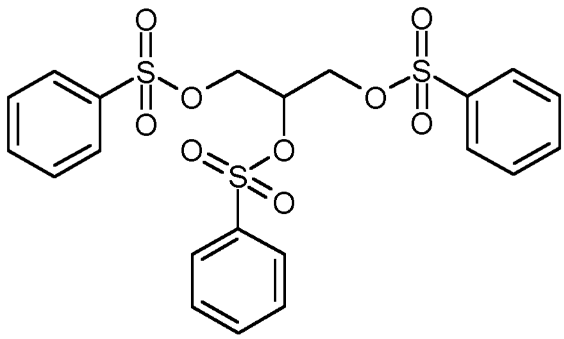

(XVII)

5. Zusammensetzung gemäß einem der vorherigen Ansprüche enthaltend

50-75 Gew.-% der Komponente A,
20-45 Gew.-% der Komponente B
0,005-0,05 Gew.-% der Komponente C und
0,2-5 Gew.-% der Komponente D.

6. Zusammensetzungen gemäß einem der vorherigen Ansprüche, wobei die Komponente B einen Lithiumgehalt von < 1 mg/kg aufweist.

7. Zusammensetzung gemäß einem der vorhergehenden Ansprüche, enthaltend als Komponente D mindestens ein Additiv ausgewählt aus der Gruppe bestehend aus Gleit- und Entformungsmitteln, Stabilisatoren, Fließfähigkeitspromotoren, Verträglichkeitsvermittlern sowie Farbstoffen und Pigmenten.

8. Zusammensetzung gemäß einem der vorherigen Ansprüche, wobei die Komponente A einen Anteil an phenolischen OH Endgruppen von mindestens 400 mg/kg aufweist.

9. Zusammensetzung gemäß einem der vorherigen Ansprüche, wobei als Komponente A aromatisches Polycarbonat und/oder aromatisches Polyestercarbonat zum Einsatz kommt, welches Fries-Strukturen gemäß mindestens einer der Formeln (IV) bis (VII) enthält

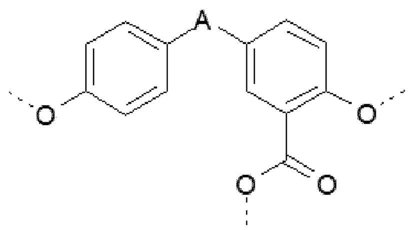

(IV)

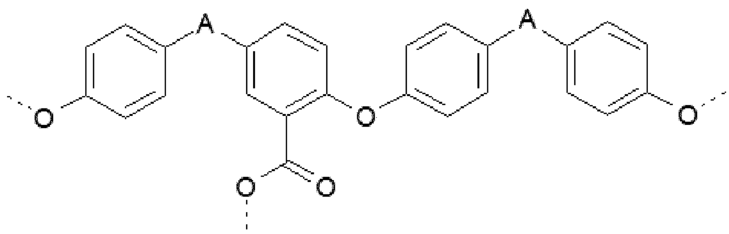

(V)

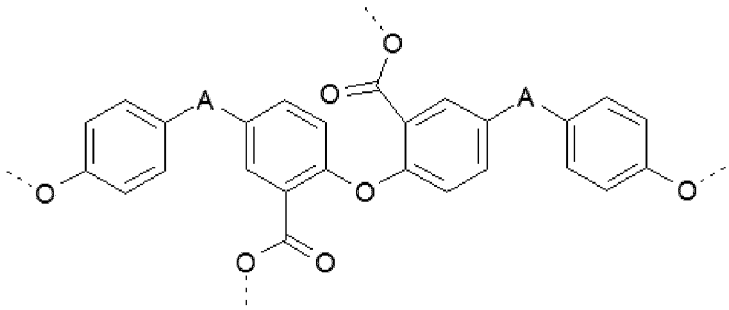

(VI)

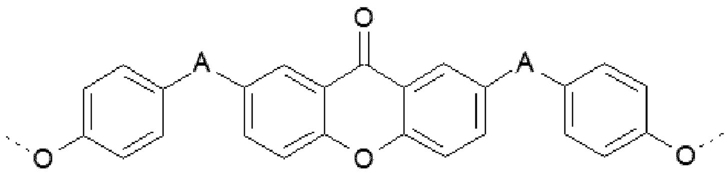

(VII)

in denen die Phenylringe unabhängig voneinander ein- oder zweifach mit C1 - C8-Alkyl, oder Halogen substituiert sein können und

wobei A steht für

eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder einen Rest der Formel (II) oder (III)

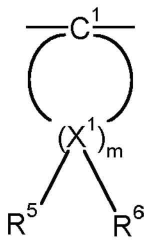

(II)

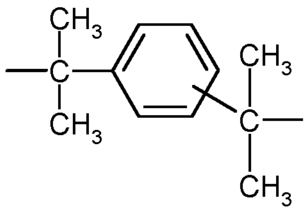

(III)

wobei

$R^5$ und $R^6$ für jedes $X^1$ individuell wählbar, unabhängig voneinander Wasserstoff oder $C_1$ bis $C_6$-Alkyl,
$X^1$ Kohlenstoff und
m eine ganze Zahl von 4 bis 7, bedeuten,

mit der Maßgabe, dass an mindestens einem Atom $X^1$, $R^5$ und $R^6$ gleichzeitig Alkyl sind,
wobei Komponente A die Struktureinheiten (IV) bis (VII) in einer Menge von in Summe 50 bis 10000 mg/kg, bezogen auf die Summe der Gew.-Anteile der in Komponente A enthaltenden Polycarbonate und Polyestercarbonate enthält.

**10.** Zusammensetzung gemäß einem der vorhergehenden Ansprüche, wobei die Komponente B.1 in Emulsionspolymerisation hergestellt wird.

**11.** Zusammensetzung gemäß einem der vorhergehenden Ansprüche, wobei dieKomponente B frei von Lithium ist.

**12.** Verfahren zur Herstellung einer schlagzähmodifizierten thermoplastischen Formmasse enthaltend

A) 30 bis 94 Gew.-% eines Polymers oder einer Polymermischung bestehend aus mindestens einem Vertreter ausgewählt aus aromatischem Polycarbonat und aromatischem Polyestercarbonat und optional zusätzlich enthaltend aromatischen Polyester, wobei die Komponente A einen Anteil an phenolischen OH Endgruppen von mindestens 300 mg/kg aufweist,
B) 5 bis 65 Gew.-% kautschukbasiertes Pfropfpolymerisat B.1 optional in Mischung mit kautschukfreiem Vinyl(co)polymerisat B.2, wobei die Komponente B einen Gehalt an von Lithium verschiedenen Alkalimetallen von in Summe >10 mg/kg aufweist,
D) 0 bis 30 Gew.-% eines oder mehrerer Polymeradditive.
wobei die Komponenten miteinander vermischt und bei einer Temperatur von 200 bis 350 °C in einem Compoundierungsaggregat aufgeschmolzen und ineinander dispergiert werden,
**dadurch gekennzeichnet, dass** im Verfahren als Komponente C ein Ester einer Sulfonsäure in einer Konzentration von 0,001 bis 1 Gew.-% der Zusammensetzung zugesetzt wird und
das Mischen der Komponenten A, B, C und D und ggf. weiterer Komponenten der Zusammensetzung in einem einzigen Schritt erfolgt oder aber alternativ die Komponente C zunächst in einem ersten Schritt mit der Gesamtmenge oder einer Teilmenge der Komponente A bei Raumtemperatur oder bei einer erhöhten Temperatur vorgemischt wird.

**13.** Formmasse, erhalten oder erhältlich aus einer Formmasse gemäß einem der Ansprüche 1 bis 11.

**14.** Verwendung einer Zusammensetzung nach einem der Ansprüche 1 bis 11 oder einer Formmasse nach Anspruch 13 zur Herstellung von Formkörpern.

**15.** Formkörper, erhalten oder erhältlich aus einer Zusammensetzung nach einem der Ansprüche 1 bis 11 oder aus einer Formmasse nach Anspruch 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1609818 A2
- EP 1612231 A1
- WO 2013160371 A1
- WO 2013160373 A1
- WO 2007065579 A1
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE 2407674 A
- DE 2407776 A
- DE 2715932 A
- DE 1900270 A
- US 3692744 A
- DE 2035390 A
- US 3644574 A
- DE 2248242 A
- GB 1409275 A
- US 4937285 P


### In der Beschreibung aufgeführte Nicht-Patentliteratur


- **SCHNELL.** Chemistry and Physics of Polycarbonates. Interscience Publishers, 1964
- **HORBACH, A. ; VEIEL, U. ; WUNDERLICH, H.** *Makromolekulare Chemie,* 1965, vol. 88, 215-231
- Kunststoff-Handbuch. Carl-Hanser-Verlag, 1973, vol. VIII, 695
- **W. SCHOLTAN ; H. LANGE.** *Kolloid, Z. und Z. Polymere,* 1972, vol. 250, 782-1796
- **M. HOFFMANN ; H. KRÖMER ; R. KUHN.** Polymeranalytik. Georg Thieme-Verlag, 1977, vol. I,II
- *Ullmanns, Enzyklopädie der Technischen Chemie,* 1980, vol. 19, 280